(19) Europäisches Patentamt
European Patent Office
Office européen des brevets

(11) **EP 3 769 861 A1**

(12) **EUROPEAN PATENT APPLICATION**
published in accordance with Art. 153(4) EPC

(43) Date of publication:
**27.01.2021 Bulletin 2021/04**

(51) Int Cl.:
**B22C 1/02** *(2006.01)*    **B22C 1/16** *(2006.01)*

(21) Application number: **19772610.2**

(86) International application number:
**PCT/JP2019/011888**

(22) Date of filing: **20.03.2019**

(87) International publication number:
**WO 2019/182065 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2018   JP 2018055302**

(71) Applicants:
• **Sintokogio, Ltd.**
**Aichi 450-6424 (JP)**

• **Tetra Co., Ltd.**
**Kasugai-shi, Aichi 486-0937 (JP)**

(72) Inventors:
• **AOKI, Tomohiro**
**Toyokawa-shi, Aichi 442-8505 (JP)**
• **KATO, Yusuke**
**Toyokawa-shi, Aichi 442-8505 (JP)**
• **MATSUBARA, Hiroyuki**
**Kasugai-shi, Aichi 486-0937 (JP)**

(74) Representative: **Papula Oy**
**P.O. Box 981**
**00101 Helsinki (FI)**

(54) **AGGREGATE MIXTURE FOR MOLD, MOLD, AND METHOD FOR SHAPING MOLD**

(57)    An aggregate mixture for a mold, the aggregate mixture including an aggregate, a water-soluble binder, a water-soluble foaming agent, an aqueous mold release agent, and water.

**EP 3 769 861 A1**

**Description**

Technical Field

The present disclosure relates to an aggregate mixture for molds, a mold, and a method for shaping a mold.

Background Art

Conventionally, a mold shaping device is used, which shapes a mold by filling a foamed mixture, that is obtained by stirring a particulate aggregate, a water-soluble binder, and water, into a cavity in a heated metal mold according to a press fit system.

As the mold shaping device, for example, Patent Document 1 discloses a mold shaping device equipped with a mixture storage means having a function as a stirring tank that stirs the aggregate, the water-soluble binder, and the water and also having a function as a press-fit cylinder that stores the mixture to be press-fitted, in which the lower end of the opening part of a hollow rectangular parallelepiped, that forms a rectangular parallelepiped and has a hollow portion penetrating from the top to the bottom, is closed with a bottom plate and this bottom plate is provided with an injection pore that injects the foamed mixture, and further, a shut-off means capable of closing the injection pore.

Patent Document 1: Re-publication of PCT International Publication No. 2005-89984

SUMMARY OF INVENTION

Technical Problem

As described in Patent Document 1, a technique of shaping a mold by stirring an aggregate mixture including an aggregate, a binder, a foaming agent, water, and the like, to produce foam and generate bubbles, and then filling by press fitting this foamed aggregate mixture into a cavity in a heated metal mold, is known. When removing the mold, that has been shaped, from the metal mold, a part of the mold may remain in the cavity in the metal mold, or a crack or a chip may be generated in the mold. Accordingly, in order to suppress such partial residue, cracking, chipping, or the like, coating of a mold release agent onto a surface of a cavity in a metal mold is conducted, before filling by press fitting the aggregate mixture into the cavity in the metal mold. As the mold release agent to be coated onto the surface of the cavity in the metal mold, a mold release agent containing, as the main component, a nonreactive silicone type such as dimethyl silicone is generally used.

However, the operation of coating of a mold release agent onto a metal mold is carried out each time for each shaping of a mold, and this coating operation of a mold release agent to be conducted each time has become a factor preventing simplification of mold shaping (for example, shortening the time taken for the shaping cycle to be repeated). Further, there are cases in which the mold release agent scatters into the surrounding environment during coating.

Therefore, eliminating the need for the operation of coating of a mold release agent onto a metal mold in the shaping of a mold, or reducing the extent of the operation has been required.

It is an object of the present disclosure to provide an aggregate mixture for a mold, which does not need, or can reduce, coating of a mold release agent onto a metal mold when shaping a mold, and a method for shaping a mold.

Further, it is another object of the present disclosure to provide a mold with an excellent mold release property.

Solution to Problem

Means for addressing the above problems are as follows.

<1> An aggregate mixture for a mold, the aggregate mixture including an aggregate, a water-soluble binder, a water-soluble foaming agent, an aqueous mold release agent, and water.

<2> The aggregate mixture for a mold according to <1>, wherein the aqueous mold release agent is a chain structure substance having at least one functional group selected from a carboxyl group, a carbonyl group, a silanol group, or a phenol group, the at least one functional group having a proton donating property that acts on the water-soluble binder.

<3> The aggregate mixture for a mold according to <2>, wherein the content of the aqueous mold release agent, as the equivalent weight of the at least one functional group that acts on the water-soluble binder, is from $2.0 \times 10^{-7}$ mol/kg to $1.0 \times 10^{-4}$ mol/kg with respect to the aggregate mixture.

<4> The aggregate mixture for a mold according to any one of <1> to <3>, wherein the aqueous mold release agent has a property of not preventing the foaming action.

<5> The aggregate mixture for a mold according to any one of <1> to <4>, wherein the water-soluble binder includes at least one selected from an inorganic salt or organic salt that acts on the at least one functional group of the aqueous mold release agent, or a carbohydrate that forms a glycoside bond with the aqueous mold release agent.
<6> The aggregate mixture for a mold according to any one of <1> to <5>, wherein the aggregate is at least one of natural silica sand or artificial sand.
<7> The aggregate mixture for a mold according to any one of <1> to <6>, wherein the particle size (AFS index) of the aggregate is from 40 to 120.
<8> The aggregate mixture for a mold according to any one of <1> to <7>, wherein the water-soluble foaming agent is a surfactant.
<9> The aggregate mixture for a mold according to any one of <1> to <8> including bubbles produced by foaming.
<10> A mold including an aggregate, a water-soluble binder, a water-soluble foaming agent, and an aqueous mold release agent.
<11> A method for shaping a mold, the method including:

a) a foamed aggregate mixture preparation process of stirring an aggregate mixture for a mold, the aggregate mixture including an aggregate, a water-soluble binder, a water-soluble foaming agent, an aqueous mold release agent, and water, to produce foam in the aggregate mixture for a mold, thereby preparing a foamed aggregate mixture containing bubbles;
b) a filling process of filling the foamed aggregate mixture into a space for shaping a mold in a metal mold;
c) a mold shaping process of evaporating the water content of the foamed aggregate mixture that has been filled, to solidify the foamed aggregate mixture, thereby shaping a mold; and
d) a removal process of removing the mold, that has been shaped, from the space for shaping a mold.

Advantageous Effects of Invention

According to the present disclosure, an aggregate mixture for a mold, which does not need or can reduce coating of a mold release agent onto a metal mold in shaping a mold, and a method for shaping a mold may be provided.
Further, a mold excellent in mold release property may be provided.

DESCRIPTION OF EMBODIMENTS

Hereinafter, embodiments in the present disclosure will be described in detail.
In this specification, the term "process" includes not only an independent process, but also a case which cannot be clearly distinguished from other process, as long as the purpose of the process is achieved.
The aggregate mixture for a mold (hereinafter, also referred to as, simply, "aggregate mixture") according to the embodiment of the disclosure contains an aggregate, a water-soluble binder, a water-soluble foaming agent, an aqueous mold release agent, and water.
The aggregate mixture for a mold according to this embodiment is a composition to be used as a material of a mold. Note that, in this specification, the term "mold" is used in a sense that encompasses a core.
In the aggregate mixture for a mold according to this embodiment, by having the configuration described above, coating of a mold release agent onto a metal mold in shaping a mold is unnecessary, or can be reduced.
The reason why this effect is exerted is guessed as follows.
The aggregate mixture for a mold according to this embodiment contains a mold release agent, and moreover, the mold release agent is aqueous, so that, in stirring the aggregate mixture containing water to produce foam, this aqueous mold release agent is dispersed favorably. This aggregate mixture for a mold which has been foamed is pressed-in into a cavity in a metal mold, and heat is applied to the aggregate mixture from the heated metal mold, to evaporate the water content, thereby shaping a mold. Note that, the aggregate mixture for a mold which has been foamed is packed into a cavity by press fitting, and pressed against the metal mold. Accordingly, in the part of the interface between the metal mold and the aggregate mixture, the aqueous mold release agent dispersed in the aggregate mixture is pushed out toward the side of the interface with the metal mold. Further, in the interface part, since the aggregate mixture contacts the heated metal mold, heat is applied to the aggregate mixture, and due to these heat and pressure, the action of the functional group possessed by the aqueous mold release agent on the water-soluble binder is accelerated. Thus, the chain structure substance, which is the main chain of the aqueous mold release agent, is concentrated at the interface and fixed. Moreover, due to the heat from the interface with the metal mold, starting points of water content evaporation occur also from the interior of the cavity, and the internal pressure is increased due to the evaporation. Thus, pressing out of the aqueous mold release agent toward the side of the interface with the metal mold is continued until the shaping of the mold is finished, and the chain structure substance of the aqueous mold release agent is concentrated at the interface with the metal mold. It is thought that, according to such a mechanism, in removing the mold from the metal mold, a favorable mold release property is exhibited due to the mold release agent incorporated in the mold, so that the operation of coating of a mold release agent to the metal mold is unnecessary or can be reduced.

In addition, since the operation of coating of a mold release agent onto a metal mold is unnecessary or can be reduced, simplification of mold shaping (for example, shortening the time taken for the shaping cycle to be repeated) can be achieved.

Further, scattering of the mold release agent which occurs during coating of a mold release agent onto a metal mold is reduced. In addition, since the aqueous mold release agent that is incorporated in the aggregate mixture is favorably dispersed in water as described above, the aqueous mold release agent is in a state of being hard to scatter to the outside of the aggregate mixture. According to the above, it is thought that scattering of the mold release agent to the surrounding environment is also suppressed.

Next, each of the components that constitute the aggregate mixture for a mold according to this embodiment will be described in detail.

[Aqueous Mold Release Agent]

The aggregate mixture for a mold according to this embodiment contains an aqueous mold release agent.

Here, the term "aqueous" means an emulsion that disperses in water at ordinary temperature (that is, at 20°C), and it is preferable that a mixed liquid obtained by mixing with the same volume of pure water shows a uniform appearance under a pressure of 1 atmosphere at 20°C.

Further, the term "mold release agent" indicates an additive which can enhance the mold release property of the surface of a mold that is shaped by using an aggregate mixture containing the additive, as compared with that of a mold shaping by using an aggregate mixture that does not contain the additive.

- Chain Structure Substance -

It is preferable that the aqueous mold release agent is a substance having a chain structure (which is referred to as a "chain structure substance" in this specification). The chain structure substance represents a high molecular weight compound having, for example, a carbon chain, in which carbon atoms are lining, or a siloxane chain which is the skeleton of a silicone.

• Property of not preventing foaming action

An oil component is dispersed in an aqueous emulsion. Note that, there are many oil components having an antifoaming action; however, in this embodiment, the property of not preventing the foaming action can be imparted to the aqueous mold release agent according to the method of appropriately selecting the surfactant to be incorporated in the emulsion or the like. Accordingly, stable foaming can be conducted, and the viscosity of the aggregate mixture is easily controlled to be within the required range at the time of filling the aggregate mixture into a metal mold.

Here, the aqueous mold release agent that has a property of not preventing the foaming action is explained. In a case in which [viscosity A] (Pa·s) of a substance obtained by further adding 1.0 parts by mass of an "aqueous mold release agent" to 100 parts by mass of Flattery Sand which is a kind of aggregate, 1.0 parts by mass of polyvinyl alcohol which is a kind of water-soluble binder, 0.03 parts by mass of an anionic surfactant which is a kind of water-soluble foaming agent, and 5.0 parts by mass of water, and then mixing the mixture by stirring at 200 rpm for 5 minutes to produce foam is 100 times or less with respect to [viscosity B] (Pa·s) of a substance obtained by mixing the mixture without adding "aqueous mold release agent" by stirring at 200 rpm for 5 minutes to produce foam, the aqueous mold release agent is deemed to have a "property of not preventing the foaming action".

Note that, [viscosity A] is more preferably 10 times or less with respect to [viscosity B]. Being closer to 1 time, being more preferable.

• Functional group

It is preferable that the aqueous mold release agent has a functional group that acts on the water-soluble binder. Here, the functional group is explained. The functional group in this embodiment is a functional group having a proton donating property that provides acidic property. Examples of the functional group include a phenol group ($-C_6H_4-OH$), a carboxyl group (a carboxy group, $-COOH$), a carbonyl group ($-C(=O)-$), and a silanol group ($-SiH_2OH$). However, the functional group in this embodiment is not limited to the examples of the functional group described above. That is, as the functional group in this embodiment, any functional group having a proton donating property can be used, since the functional group acts on the water-soluble binder.

. Equivalent weight of functional group contained in aggregate mixture

The content of the aqueous mold release agent, as the amount of the functional group in the aggregate mixture, that is, the equivalent weight of the functional group with respect to the aggregate mixture, is preferably from $2.0 \times 10^{-7}$ mol/kg to $1.0 \times 10^{-4}$ mol/kg, and more preferably from $1.0 \times 10^{-6}$ mol/kg to $4.0 \times 10^{-5}$ mol/kg. A proper amount of this functional group is added by the aqueous mold release agent.

When the equivalent weight of the functional group contained in the aggregate mixture is $2.0 \times 10^{-7}$ mol/kg or more, the mold release property of the mold from the metal mold is improved. Whereas, when the equivalent weight of the functional group is $4.0 \times 10^{-5}$ mol/kg or less, stable foaming can be conducted, and the viscosity of the aggregate mixture is easily controlled to be within the required range at the time of filling the aggregate mixture into a metal mold.

[Aggregate]

The aggregate in this embodiment is not particularly limited, and any conventionally known aggregate may be used. Examples of the aggregate include silica sand (for example, natural silica sand), alumina sand, olivine sand, chromite sand, zirconium sand, and mullite sand. In addition, various kinds of artificial aggregate (what is called, artificial sand) may also be used.

Among these, at least one of natural silica sand or artificial sand is particularly preferable, from the viewpoint that sufficient strength of the mold is easily obtained even if the addition amount of the binder with respect to the aggregate is decreased and that a high rate of aggregate reclamation is easily obtained.

The particle size (that is, the AFS index) of the aggregate in this embodiment is preferably from AFS;30 (JIS;38) to AFS; 150 (JIS;243), and more preferably from AFS;40 (JIS;52) to AFS; 120 (JIS; 184).

When the particle size (that is, the AFS index) is AFS;30 or more, an excellent fluidity is obtained, and packing property in shaping a mold is improved. Whereas, when the particle size is AFS; 150 or less, the breathability of the mold is maintained favorable. Especially, when the particle size is AFS;40 or more, the aggregate is fine, transcription property with respect to a metal mold having a fine shape is improved, and moreover, the strength of the mold can be enhanced. Whereas, when the particle size is AFS; 120 or less, the sand is rather coarse, handling property is improved, and reclamation can be easily conducted.

Note that, in this specification, the term "particle size" represents a particle size index which is measured in accordance with the "testing method for particle size of casting sand" described in JIS Z 2601-1993 Annex 2.

The shape of the aggregate in this embodiment is not particularly limited, and may be any shape, such as a round shape, a rounded rectangle shape, a polygonal shape, a crystalline shape, or the like. From the viewpoint that an excellent fluidity is obtained such that the packing property in shaping a mold is improved, and that the breathability of the mold is maintained favorable, a round shape is particularly preferable.

[Water-Soluble Binder]

From the viewpoint of maintaining the shape of the mold favorable at ordinary temperature and in a temperature region of the molten metal to be poured, a water-soluble binder is incorporated in the aggregate mixture for a mold, in order to impart caking power to the aggregate.

Note that, the term "water-soluble" means soluble in water at ordinary temperature (that is, at 20°C), and it is preferable that a mixed liquid obtained by mixing with the same volume of pure water shows uniform appearance under a pressure of 1 atmosphere at 20°C.

Examples of the water-soluble binder in this embodiment include inorganic salts and organic salts which act on the functional group possessed by the aqueous mold release agent, such as sodium silicate (what is called, water glass), potassium silicate, ammonium silicate, orthophosphate, pyrophosphate, trimetaphosphate, polymetaphosphate, colloidal silica, colloidal alumina, or alkyl silicate.

Among these, sodium silicate (what is called, water glass) and potassium silicate are more preferable.

Here, concerning sodium silicate (what is called, water glass), sodium silicate having a molar ratio (that is, a molecular ratio of $SiO_2 \cdot Na_2O$) of from 1.2 to 3.8 is preferable, and further, sodium silicate having a molar ratio of from 2.0 to 3.3 is more preferable. When the molar ratio is equal to or more than the lower limit value described above, there is an advantage that the change in quality of the water glass can be suppressed even after long-term storage under low temperature. Whereas, when the molar ratio is equal to or less than the upper limit value described above, there is an advantage that the viscosity of the binder is easily adjusted.

Further, as the water-soluble binder, a water-soluble binder having foaming property, which is described below, can also be used.

Here, concerning the water-soluble binder, for example, one kind from among the water-soluble binders listed above may be used singly, or two or more kinds thereof may be used in combination.

In this embodiment, the content of the water-soluble binder with respect to the aggregate is preferably set according to the kinds of the binder and the aggregate to be used. The content of the water-soluble binder is preferably from 0.1% by mass to 20% by mass, and more preferably from 0.1% by mass to 10% by mass.

[Water-Soluble Foaming Agent]

Further, in shaping a mold using the aggregate mixture according to this embodiment, it is preferable to produce foam by using a water-soluble foaming agent, and mixing and stirring the water-soluble foaming agent together with the aggregate, the water-soluble binder, and the like. Namely, it is preferable to prepare a foamed aggregate mixture, thereby enhancing the fluidity, and then manufacture a mold.

Here, the term "water-soluble" means soluble in water at ordinary temperature (that is, at 20°C), and it is preferable that a mixed liquid obtained by mixing with the same volume of pure water shows uniform appearance under a pressure of 1 atmosphere at 20°C.

The water-soluble foaming agent is preferably a water-soluble foaming agent further having a function as a binder (that is, a water-soluble binder having foaming property). Further, from the viewpoint of further efficiently producing the foam described above in the aggregate mixture, a water-soluble binder which is an organic salt having foaming property and acting on the functional group possessed by the aqueous mold release agent, and a water-soluble binder which is a carbohydrate forming a glycoside bond with the aqueous mold release agent are preferable.

Examples of the water-soluble binder having foaming property include surfactants (specifically, an anionic surfactant, a nonionic surfactant, an amphoteric surfactant, and the like), polyvinyl alcohol and derivatives thereof, saponin, starch and derivatives thereof, additional sugars, and the like. Examples of the additional sugars include polysaccharides such as cellulose or fructose, tetrasaccharides such as acarbose, trisaccharides such as raffinose or maltotriose, disaccharides such as maltose, sucratose, or trehalose, monosaccharides such as glucose or fructose, and additional oligosaccharides.

Examples of the anionic surfactant include a sodium salt of a fatty acid, a monoalkyl sulfate, a linear sodium alkylbenzene sulfonate, sodium lauryl sulfate, a sodium ether sulfate, and the like. Examples of the nonionic surfactant include a polyoxyethylene alkyl ether, a sorbitan fatty acid ester, an alkyl polyglucoside, and the like. Examples of the amphoteric surfactant include cocamidopropyl betaine, cocamidopropyl hydroxysultaine, lauryl dimethyl aminoacetic acid betaine, and the like.

Concerning the water-soluble forming agent, for example, one kind from among those listed above may be used singly, or two or more kinds thereof may be used in combination.

In this embodiment, the content of the water-soluble foaming agent with respect to the aggregate is preferably set according to the kinds of the foaming agent and the aggregate to be used.

The total content of the anionic surfactant, the nonionic surfactant, and the amphoteric surfactant with respect to the aggregate is preferably from 0.001% by mass to 0.1% by mass, and more preferably from 0.005% by mass to 0.05% by mass.

The total content of the polyvinyl alcohol and the derivatives thereof, the saponin, the starch and the derivatives thereof, and the additional sugars with respect to the aggregate is preferably from 0.1% by mass to 20.0% by mass, and more preferably from 0.2% by mass to 5% by mass.

[Water]

The aggregate mixture for a mold according to this embodiment contains water.

In this embodiment, the content of the water with respect to the aggregate is preferably set according to the kinds of the binder and the aggregate to be used. The content of the water is preferably from 0.5% by mass to 10.0% by mass, and more preferably from 1.5% by mass to 7.5% by mass.

[Additional Composition]

Further, other than the above, a conventionally known composition such as a catalyst, an oxidization accelerator, or the like, may be added to the aggregate mixture for a mold according to this embodiment.

[Kneading Method]

The aggregate mixture for a mold according to this embodiment is manufactured by mixing the various components described above. The order of the addition and the method of kneading are not particularly limited.

As the kneading apparatus that may be used when kneading the above-described components, a conventionally known kneading apparatus may be used without any particular limitation. For example, a planetary centrifugal mixer, an EIRICH intensive mixer, a Sinto Simpson's "Mix Muller", or the like may be used.

[Shaping Method for Mold]

The shaping of the mold using the aggregate mixture for a mold according to this embodiment may be shaping using a molding machine or may be shaping by benching molding.

However, it is preferable to prepare a foamed aggregate mixture by mixing and stirring the above-described various components to produce foam, and then fill by press fitting the obtained foamed aggregate mixture into the heated space (what is called, cavity) for shaping a mold in the metal mold for shaping a mold, thereby shaping a mold. In the press fitting, it is more preferable that filling is performed through injection.

More specifically, it is preferable to shape the mold by the shaping method including the following processes a) to d).

a) A foamed aggregate mixture preparation process of stirring an aggregate mixture including an aggregate, a water-soluble binder, a water-soluble foaming agent, an aqueous mold release agent, and water, to produce foam in the aggregate mixture, thereby preparing a foamed aggregate mixture containing bubbles;
b) a filling process of filling the foamed aggregate mixture into a space (what is called, cavity) for shaping a mold in a metal mold;
c) a mold shaping process of evaporating the water content of the foamed aggregate mixture that has been packed, to solidify the foamed aggregate mixture, thereby shaping a mold; and
d) a removal process of removing the mold, that has been shaped, from the space for shaping a mold.

In the foamed aggregate mixture filled by press fitting into the space for shaping a mold in the metal mold that has been heated to high temperature, a phenomenon is caused, in which the bubbles dispersed in the foamed aggregate mixture by stirring and the water vapor generated from the water content in the foamed aggregate mixture by the heat of the heated metal mold are accumulated at the center part of the mold. As a result, the mold has a low packing density of the aggregate, the water-soluble binder, the water-soluble foaming agent, and the aqueous mold release agent (that is, a low density of the solid content) at the center part. In contrast, the mold has a high packing density of the aggregate, the water-soluble binder, the water-soluble foaming agent, and the aqueous mold release agent (a high density of the solid content) at the surface.

The aqueous mold release agent that exists at the surface of the mold has a significant influence on the mold release property of the mold from the metal mold. Therefore, in this embodiment, in which the packing density of the aqueous mold release agent is high at the surface as described above, the mold release property due to the aqueous mold release agent is further favorably exhibited. In addition, since the packing density of the aqueous mold release agent is high at the surface, it is also effective for reducing the addition amount of the aqueous mold release agent.

With regard to the mold, whether the density of the solid content at the center part is lower or not than the density of the solid content at the surface part may be determined by visually confirming the degree of packing of the solid content (that is, the aggregate, the water-soluble binder, the water-soluble foaming agent, and the aqueous mold release agent) in the cross section of the center part and at the surface of the mold.

In order to improve the packing property of the aggregate mixture into the space for shaping a mold and to improve the packing density described above, it is preferable to foam the aggregate mixture until whipped creamy. More specifically, the viscosity of the foamed aggregate mixture (that is, the aggregate mixture for a mold after stirring) is preferably from 0.5 Pa·s to 10 Pa·s, and the viscosity is more preferably from 0.5 Pa·s to 8 Pa·s.

Measurement of the viscosity of the foamed aggregate mixture (that is, the aggregate mixture for a mold after stirring) is performed as described below.

- Measurement Method -

The foamed aggregate mixture is charged into a cylindrical container having an inside diameter of 42 mm and having a pore with a diameter of 6 mm at the bottom. Then, a column-shaped weight having a weight of 1 kg and a diameter of 40 mm is placed inside of the cylindrical container. The foamed aggregate mixture is discharged from the pore of the cylindrical container when pressurized with one's own weight of the weight. In this process, the duration of time required for the weight to travel 50 mm is measured, and the viscosity of the foamed aggregate mixture is determined according to the following equation. Here, the temperature at the time of measuring the viscosity is set at 20°C.

$$\text{Equation} \qquad \mu = \pi D^4 P_p t / 128 L_1 L_2 S$$

μ: viscosity [Pa·s]

D: diameter of the pore at the bottom [m]

$P_p$: pressure of the weight [Pa]

t: duration of time required for the weight to travel 50 mm [s]

$L_1$: travel distance of the weight (= 50 mm)

$L_2$: plate thickness of the pore at the bottom [m]

S: average value of an area of the bottom of the column-shaped weight and a cross-sectional area of the hollow region (that is, the inside diameter part) inside of the cylinder [$m^2$]

Examples of a method of filling the space (what is called, cavity) for shaping a mold with the foamed aggregate mixture include direct pressurization using a piston in a cylinder, filling by supplying compressed air to inside a cylinder, pressure feeding using a screw or the like, slushing, and the like. However, from the viewpoints of the packing speed and the packing stability by applying uniform pressure to the foamed aggregate mixture, direct pressurization using a piston and filling by supplying compressed air are preferable.

The evaporation of the water content in the foamed aggregate mixture packed into the space (what is called, cavity) for shaping a mold is performed, for example, by heat from the heated metal mold, flow of heated air to the space (what is called, cavity) for shaping a mold, a combination thereof, or the like.

[Manufacture of Cast Product Using Mold]

The mold manufactured by using the aggregate mixture for a mold according to this embodiment is used for casting various metals or alloys. Examples of a material of a molten metal used for casting include the followings. Note that, the pouring temperature described below represents a temperature at which the material described below melts to an extent appropriate for pouring.

Aluminum or an aluminum alloy (pouring temperature: for example, from 670°C to 700°C)

Iron or an iron alloy (pouring temperature: for example, from 1300°C to 1400°C)

Bronze (pouring temperature: for example, from 1100°C to 1250°C)

Brass (pouring temperature: for example, from 950°C to 1100°C)

The casting is conducted, for example, by pouring a molten metal of a material as listed above to the space between the core as the mold and the metal mold, and then cooling them to remove the mold.

EXAMPLES

Hereinafter, the present disclosure is described in detail with reference to Examples; however, the present disclosure is by no means limited to the following Examples. In the following, "part(s)" represents "part(s) by mass", unless otherwise specifically stated.

<Example A1>

The materials in the composition shown in Table 1 were mixed using a mixer (a table top mixer, manufactured by AICOHSHAMFG. CO., LTD.) by stirring at about 200 rpm for about 5 minutes to produce foam, thereby preparing a foamed aggregate mixture.

The amount of the aqueous mold release agent (LC-9 Trial Product) was 0.05 parts by mass, and the equivalent weight of the functional group with respect to the aggregate mixture was $1.0 \times 10^{-6}$ mol/kg.

TABLE 1

| | | |
|---|---|---|
| Aggregate (Sand) | Natural silica sand (Flattery Sand) | 100 parts by mass |
| Aqueous mold release agent | LC-9 Trial Product (TETRA Co., Ltd.) (equivalent weight of functional group with respect to aggregate mixture) $1.0 \times 10^{-6}$ mol/kg | 0.05 parts by mass |
| Water-soluble binder | Polyvinyl alcohol | 1.0 parts by mass |
| Water-soluble foaming agent | Anionic surfactant | 0.03 parts by mass |

(continued)

| Water | Distilled water | 5.0 parts by mass |
|---|---|---|

Then, a cavity having a volume of about 80 cm$^3$ in a metal mold for the bending test, which was heated to 220°C and onto which a mold release agent was not coated, was filled with this foamed aggregate mixture by applying pressure on the condition of a cylinder face pressure of 0.4 MPa (filling process).

Then, the foamed aggregate mixture that had been packed into the heated metal mold was allowed to stand for 2 minutes, to evaporate the water content by the heat of the metal mold, thereby solidifying the foamed aggregate mixture (solidification process).

Thereafter, the core as the mold was removed from the cavity in the metal mold.

It was possible to remove the mold (that is, the core) without residue in the cavity in the metal mold, and without generating a crack or a chip in the mold.

From this mold, bending test pieces were prepared and, after elapse of 60 minutes, the bending strength was measured. The measurement of the bending strength was conducted in accordance with JACT TEST METHOD SM-1, "Bending strength testing method". As a result, with regard to each of the bending test pieces, a strength of 3.5 MPa was obtained. Note that, when the bending strength of a mold is 2 MPa or more, the strength is not problematic for handling the mold and is a strength that is enough for use as a mold.

<Example A2>

A core as a mold was obtained in a manner substantially similar to that in Example A1, except that the amount of the aqueous mold release agent (LC-9 Trial Product) was changed to 0.5 parts by mass, that is, the equivalent weight of the functional group with respect to the aggregate mixture was changed to $1.0 \times 10^{-5}$ mol/kg.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.0 MPa was obtained.

<Example A3>

A core as a mold was obtained in a manner substantially similar to that in Example A1, except that the amount of the aqueous mold release agent (LC-9 Trial Product) was changed to 0.01 parts by mass, that is, the equivalent weight of the functional group with respect to the aggregate mixture was changed to $2.0 \times 10^{-7}$ mol/kg.

It was possible to remove the mold (that is, the core) without rresidue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.2 MPa was obtained.

<Example A4>

A core as a mold was obtained in a manner substantially similar to that in Example A1, except that Liquid Trial Product 8 (manufactured by TETRA Co., Ltd.) having a different chain structure was used in place of the aqueous mold release agent (LC-9 Trial Product), and the amount thereof was 0.1 parts by mass, that is, the equivalent weight of the functional group with respect to the aggregate mixture was changed to $3.0 \times 10^{-5}$ mol/kg.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.0 MPa was obtained.

<Comparative Example A1>

The materials in the composition shown in Table 2 were mixed using a mixer (a table top mixer, manufactured by AICOHSHAMFG. CO., LTD.) by stirring at about 200 rpm for about 5 minutes to produce foam, thereby preparing a foamed aggregate mixture.

TABLE 2

| Aggregate (Sand) | Natural silica sand (Flattery Sand) | 100 parts by mass |
|---|---|---|
| Aqueous mold release agent | - | 0 parts by mass |
| Water-soluble binder | Polyvinyl alcohol | 1.0 parts by mass |
| Water-soluble foaming agent | Anionic surfactant | 0.03 parts by mass |
| Water | Distilled water | 5.0 parts by mass |

Then, a cavity having a volume of about 80 cm$^3$ in a metal mold for the bending test, which was heated to 220°C and onto which a mold release agent was not coated, was filled with this foamed aggregate mixture by applying pressure on the condition of a cylinder face pressure of 0.4 MPa (filling process).

Then, the foamed aggregate mixture that had been packed into the heated metal mold was allowed to stand for 2 minutes, to evaporate the water content by the heat of the metal mold, thereby solidifying the foamed aggregate mixture (solidification process).

Thereafter, the core as the mold was removed from the cavity in the metal mold.

A part of the mold (that is, the core) remained in the cavity in the metal mold, and a crack and a chip were generated in the mold. Therefore, it was impossible to prepare bending test pieces.

<Comparative Example A2>

A core as a mold was obtained in a manner substantially similar to that in Comparative Example A1, except that, before filling the metal mold with the foamed aggregate mixture by applying pressure, a dimethyl silicone type mold release agent was coated onto the cavity in the metal mold.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.5 MPa was obtained.

However, since the operation of coating of the mold release agent onto the metal mold was carried out, the time needed for one cycle in the shaping of molds was increased by 10% as compared with the case of Example A1.

<Example B1>

The materials in the composition shown in Table 3 were mixed using a mixer (a table top mixer, manufactured by AICOHSHA MFG. CO., LTD.) by stirring at about 200 rpm for about 5 minutes to produce foam, thereby preparing a foamed aggregate mixture.

The amount of the aqueous mold release agent (LC-9 Trial Product) was 0.05 parts by mass, and the equivalent weight of the functional group with respect to the aggregate mixture was $1.0 \times 10^{-6}$ mol/kg.

TABLE 3

| Aggregate (Sand) | Artificial sand (ESPEARL #60) | 100 parts by mass |
|---|---|---|
| Aqueous mold release agent | LC-9 Trial Product (TETRA Co., Ltd.) (equivalent weight of functional group with respect to aggregate mixture) $1.0 \times 10^{-6}$ mol/kg | 0.05 parts by mass |
| Water-soluble binder | Sodium silicate | 2.0 parts by mass |
| Water-soluble foaming agent | Anionic surfactant | 0.03 parts by mass |
| Water | Distilled water | 3.0 parts by mass |

Then, a cavity having a volume of about 80 cm$^3$ in a metal mold for the bending test, which was heated to 220°C and onto which a mold release agent was not coated, was filled with this foamed aggregate mixture by applying pressure on the condition of a cylinder face pressure of 0.4 MPa (filling process).

Then, the foamed aggregate mixture that had been packed into the heated metal mold was allowed to stand for 2 minutes, to evaporate the water content by the heat of the metal mold, thereby solidifying the foamed aggregate mixture (solidification process).

Thereafter, the core as the mold was removed from the cavity in the metal mold.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.2 MPa was obtained.

<Example B2>

A core as a mold was obtained in a manner substantially similar to that in Example B1, except that the amount of the aqueous mold release agent (LC-9 Trial Product (manufactured by TETRA Co., Ltd.)) was changed to 0.5 parts by mass, that is, the equivalent weight of the functional group with respect to the aggregate mixture was changed to $1.0 \times 10^{-5}$ mol/kg.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 2.8 MPa was obtained.

<Example B3>

A core as a mold was obtained in a manner substantially similar to that in Example B1, except that the amount of the aqueous mold release agent (LC-9 Trial Product (manufactured by TETRA Co., Ltd.)) was changed to 0.01 parts by mass, that is, the equivalent weight of the functional group with respect to the aggregate mixture was changed to $2.0 \times 10^{-7}$ mol/kg.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.3 MPa was obtained.

<Example B4>

A core as a mold was obtained in a manner substantially similar to that in Example B1, except that Liquid Trial Product 8 (manufactured by TETRA Co., Ltd.) having a different chain structure was used in place of the aqueous mold release agent (LC-9 Trial Product), and the amount thereof was 0.1 parts by mass, that is, the equivalent weight of the functional group with respect to the aggregate mixture was changed to $3.0 \times 10^{-5}$ mol/kg.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 4.1 MPa was obtained.

<Comparative Example B1>

The materials in the composition shown in Table 4 were mixed using a mixer (a table top mixer, manufactured by AICOHSHA MFG. CO., LTD.) by stirring at about 200 rpm for about 5 minutes to produce foam, thereby preparing a foamed aggregate mixture.

TABLE 4

| Aggregate (Sand) | Artificial sand (ESPEARL #60) | 100 parts by mass |
|---|---|---|
| Aqueous mold release agent | - | 0 parts by mass |
| Water-soluble binder | Sodium silicate | 2.0 parts by mass |
| Water-soluble foaming agent | Anionic surfactant | 0.03 parts by mass |
| Water | Distilled water | 3.0 parts by mass |

Then, a cavity having a volume of about 80 cm$^3$ in a metal mold for the bending test, which was heated to 220°C and onto which a mold release agent was not coated, was filled with this foamed aggregate mixture by applying pressure on the condition of a cylinder face pressure of 0.4 MPa (filling process).

Then, the foamed aggregate mixture that had been packed into the heated metal mold was allowed to stand for 2 minutes, to evaporate the water content by the heat of the metal mold, thereby solidifying the foamed aggregate mixture (solidification process).

Thereafter, the core as the mold was removed from the cavity in the metal mold.

A part of the mold (that is, the core) remained in the cavity in the metal mold, and a crack and a chip were generated in the mold. Therefore, it was impossible to prepare bending test pieces.

<Comparative Example B2>

A core as a mold was obtained in a manner substantially similar to that in Comparative Example B1, except that, before filling the metal mold with the foamed aggregate mixture by applying pressure, a dimethyl silicone type mold release agent was coated onto the cavity in the metal mold.

It was possible to remove the mold (that is, the core) without residue in the cavity in the metal mold, and without generating a crack or a chip in the mold.

From this mold, bending test pieces were prepared and, after elapse of 60 minutes, the bending strength was measured. As a result, with regard to each of the bending test pieces, a strength of 3.0 MPa was obtained.

However, since the operation of coating of the mold release agent onto the metal mold was carried out, the time needed for one cycle in the shaping of molds was increased by 10% as compared with the case of Example B1.

Note that, details of the materials shown in Table 1 to Table 4 are as follows.

(Aqueous mold release agent)

- Producer: TETRA Co., Ltd., product name: LC-9 Trial Product

  Component: special silicone aqueous dispersion
  (Functional group: carbonyl group, chain structure: siloxane chain)
  Equivalent weight of the functional group in the dispersion: $2.0 \times 10^{-3}$ mol/kg

- Producer: TETRA Co., Ltd., product name: Liquid Trial Product 8

  Component: special wax aqueous dispersion
  (Functional group: carbonyl group, chain structure: carbon chain)
  Equivalent weight of the functional group in the dispersion: $3.0 \times 10^{-2}$ mol/kg

(Aggregate)

- Natural silica sand (Flattery Sand, Cape Flattery Silica Mines)
- Artificial aggregate (ESPEARL #60, Yamakawa Sangyo Co., Ltd.)

(Water-soluble binder)

- Polyvinyl alcohol (producer: KURARAY CO., LTD., product name: PVA105)
- Sodium silicate (water glass, molar ratio 2.0, manufactured by FUJI CHEMICAL CO., LTD., the first type)

(Water-soluble foaming agent)

- Anionic surfactant (ether sulfate Na salt, NOF CORPORATION)

The disclosure of Japanese Patent Application No. 2018-55302 is incorporated by reference herein in its entirety.

All publications, patent applications, and technical standards mentioned in this specification are herein incorporated by reference to the same extent as if such individual publication, patent application, or technical standard was specifically and individually indicated to be incorporated by reference.

**Claims**

1. An aggregate mixture for a mold, the aggregate mixture comprising:

    an aggregate,
    a water-soluble binder,
    a water-soluble foaming agent,
    an aqueous mold release agent, and
    water.

2. The aggregate mixture for a mold according to claim 1, wherein the aqueous mold release agent is a chain structure substance having at least one functional group selected from a carboxyl group, a carbonyl group, a silanol group, or a phenol group, the at least one functional group having a proton donating property that acts on the water-soluble binder.

3. The aggregate mixture for a mold according to claim 2, wherein a content of the aqueous mold release agent, as an equivalent weight of the at least one functional group that acts on the water-soluble binder, is from $2.0 \times 10^{-7}$ mol/kg to $1.0 \times 10^{-4}$ mol/kg with respect to the aggregate mixture.

4. The aggregate mixture for a mold according to any one of claim 1 to claim 3,
    wherein the aqueous mold release agent has a property of not preventing a foaming action.

5. The aggregate mixture for a mold according to any one of claim 1 to claim 4,
    wherein the water-soluble binder comprises at least one selected from an inorganic salt or organic salt that acts on the at least one functional group of the aqueous mold release agent, or a carbohydrate that forms a glycoside bond with the aqueous mold release agent.

6. The aggregate mixture for a mold according to any one of claim 1 to claim 5,
    wherein the aggregate is at least one of natural silica sand or artificial sand.

7. The aggregate mixture for a mold according to any one of claim 1 to claim 6,
    wherein a particle size (AFS index) of the aggregate is from 40 to 120.

8. The aggregate mixture for a mold according to any one of claim 1 to claim 7,
    wherein the water-soluble foaming agent is a surfactant.

9. The aggregate mixture for a mold according to any one of claim 1 to claim 8, comprising bubbles produced by foaming.

10. A mold, comprising:

    an aggregate,
    a water-soluble binder,
    a water-soluble foaming agent, and
    an aqueous mold release agent.

11. A method for shaping a mold, the method comprising:

    a) stirring an aggregate mixture for a mold, the aggregate mixture including an aggregate, a water-soluble binder, a water-soluble foaming agent, an aqueous mold release agent, and water, to produce foam in the aggregate mixture for a mold, thereby preparing a foamed aggregate mixture containing bubbles;
    b) filling the foamed aggregate mixture into a space for shaping a mold in a metal mold;
    c) evaporating a water content of the foamed aggregate mixture that has been filled, to solidify the foamed aggregate mixture, thereby shaping a mold; and

d) removing the mold, that has been shaped, from the space for shaping a mold.

## INTERNATIONAL SEARCH REPORT

| | International application No. |
|---|---|
| | PCT/JP2019/011888 |

**A. CLASSIFICATION OF SUBJECT MATTER**
Int.Cl. B22C1/02(2006.01)i, B22C1/16(2006.01)i

According to International Patent Classification (IPC) or to both national classification and IPC

**B. FIELDS SEARCHED**

Minimum documentation searched (classification system followed by classification symbols)
Int.Cl. B22C1/02, B22C1/16

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-217660 A (SINTOKOGIO LTD.) 14 December 2017, claims 1-22, paragraphs [0073]-[0087] | 10 |
| A | & WO 2017/212684 A1 & CN 108602112 A & BR 112018014484 A & KR 10-2019-0015181 A | 1-9, 11 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13.05.2019 | 21.05.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

<table>
<tr><td colspan="3" align="center">**INTERNATIONAL SEARCH REPORT**</td><td>International application No.<br>PCT/JP2019/011888</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | WO 2014/077203 A1 (SINTOKOGIO LTD.) 22 May 2014, claims 1-19, paragraphs [0080]-[0093]<br>& EP 2921243 A1, claims, paragraphs [0090]-[0103] & US 2016/0121388 A1 & CN 104812509 A & KR 10-2015-0079679 A & MX 2015006148 A & KR 10-2016-0124261 A & RU 2015122429 A & BR 112015011058 A | 10<br>1-9, 11 |
| Y<br>A | WO 2015/064506 A1 (TOYOTA MOTOR CORPORATION) 07 May 2015, claims 1-3, paragraphs [0015]-[0017]<br>& US 2016/0236267 A1, claims, paragraphs [0022]-[0123] & DE 112014004918 T & CN 105658353 A | 10<br>1-9, 11 |
| Y<br>A | JP 2017-136600 A (TOYOTA MOTOR CORPORATION) 10 August 2017, claim 1, paragraphs [0014]-[0019]<br>(Family: none) | 10<br>1-9, 11 |
| Y<br>A | JP 6-292939 A (TETRA CO., LTD.) 21 October 1994, claims 1-2, paragraphs [0029]-[0046]<br>& US 5626656 A, claims, column 5, line 21 to column 9, line 14 & WO 1994/014556 A1 & EP 628366 A1 & CA 2129667 A | 10<br>1-9, 11 |

Form PCT/ISA/210 (continuation of second sheet) (January 2015)

**EP 3 769 861 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200589984 A

- JP 2018055302 A